(19) 

**Europäisches Patentamt**
**European Patent Office**
**Office européen des brevets**

(11) **EP 4 540 205 B1**

(12) **EUROPEAN PATENT SPECIFICATION**

(45) Date of publication and mention
of the grant of the patent:
**03.06.2026 Bulletin 2026/23**

(21) Application number: **23736938.4**

(22) Date of filing: **09.06.2023**

(51) International Patent Classification (IPC):
*C05G 3/40* (2020.01)        *C05G 5/12* (2020.01)
*C05G 5/30* (2020.01)

(52) Cooperative Patent Classification (CPC):
**C05G 3/40; C05G 5/12; C05G 5/37; C05G 5/38**

(86) International application number:
**PCT/US2023/068160**

(87) International publication number:
**WO 2023/244935 (21.12.2023 Gazette 2023/51)**

(54) **CONTROLLED RELEASE FERTILIZER COATINGS USING HYDROPHILIC BLENDS**

DÜNGERBESCHICHTUNGEN MIT KONTROLLIERTER FREISETZUNG UNTER VERWENDUNG
HYDROPHILER MISCHUNGEN

ENROBAGES D'ENGRAIS À LIBÉRATION RÉGULÉE UTILISANT DES MÉLANGES HYDROPHILES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.06.2022 US 202263353124 P**

(43) Date of publication of application:
**23.04.2025 Bulletin 2025/17**

(73) Proprietor: **Dow Global Technologies LLC**
**Midland, MI 48674 (US)**

(72) Inventors:
• **KOSANOVICH, Alex J.**
**Freeport, Texas 77541 (US)**
• **SRIVASTAVA, Yasmin N.**
**Lake Jackson, Texas 77566 (US)**

• **JALIFE RUZ, Omar E.**
**Freeport, Texas 77541 (US)**

(74) Representative: **Beck Greener LLP**
**Fulwood House**
**12 Fulwood Place**
**London WC1V 6HR (GB)**

(56) References cited:
**WO-A2-2013/173739     US-A1- 2015 376 077**

• **BASF: "Pluracol GP730 TDS", 21 May 2019
(2019-05-21), pages 1 - 2, XP093079796,
Retrieved from the Internet <URL:https://
polyurethanes.basf.us/files/pdf/
Pluracol_GP730_190521_144815.pdf> [retrieved
on 20230907]**

**Description**

<u>Field</u>

Embodiments relate to coated fertilizer compositions having controlled dissolution and release profiles.

<u>Introduction</u>

Coatings on fertilizer have been used for controlled release that increases fertilizer efficacy, reduces the quantity and frequency of applications, and lowers labor costs. This in turn lowers the risk of root burn from overdosage of fertilizer, as well as protects against nutrient loss from leaching and denitrification processes. However, defects in coatings can lead to performance irregularity and premature coating degradation. Coating degradation in turn can lead to uncontrolled release, scheduling disruptions, and plant damage from erratic concentration gradients. WO 2013/173739 discloses a coated fertilizer comprising a core particle, a polyurethane layer, and a wax layer

<u>Summary</u>

Coated fertilizer compositions may contain a fertilizer granule; two or more polyurethane layers on the fertilizer granule, wherein the polyurethane layer is reaction product of: an isocyanate component including one or more isocyanate compound, and an isocyanate-reactive component including a polyol component containing: (a) from 65 wt% to 80 wt% of a hydrophilic polyether polyol having an OH number in a range of 220 mg KOH/g to 400 mg KOH/g , wherein ethylene oxide is from 90 wt% to 100 wt% of a total alkylene oxide content of the hydrophilic polyether polyol, hydroxyl functionality from 2 to 3, and (b) from 20 wt% to 35 wt% of a low EW polyol having a formula of $CH_2OHC(R^1)(R^2)CH_2OH$, wherein $R^1$ is $CH_2OH$ or OH, and $R^2$ is H or a C1 to C3 alkyl group; the isocyanate index being from 120 to 160; and one or more wax layers on the fertilizer granule including a polyolefin wax.

<u>Detailed Description</u>

Embodiments relate to coated fertilizer compositions having multiple layers as defined in claim 1, which provide a slowed release profile and controlled dissolution when compared with uncoated fertilizer. Fertilizer coatings may be multilayered in some cases and a mixture of one or more polyurethane layers having one or more wax layers interspersed therebetween. Coated fertilizer compositions may include one or more polyurethane layers produced by reacting an isocyanate component with an isocyanate-reactive component containing a mixture of hydrophilic polyether polyol and a low equivalent weight (EW) polyol.

Coated fertilizer compositions disclosed herein utilize hydrophilic polyether polyols and may provide enhanced fertilizer release profiles when compared to similar formulations utilizing hydrophobic polyols such as castor oil or propoxylated polyols. While hydrophilic polyether polyols are typically avoided as associated with erratic release rates, the incorporation of a low EW polyol in the isocyanate-reactive component may unexpectedly result in a substantial increase of the duration of controlled release of the fertilizer. Particularly, the use of an isocyanate-reactive component containing a polyol component containing a combination of low EW polyols with hydrophilic polyether polyols provides controlled release of fertilizer over longer time scales when compared to relatively hydrophobic polyols such as PO-based polyols that result in poor controlled release performance. Coated fertilizer compositions disclosed herein may be easier to handle and have a release period that can extend up to weeks or months after application.

Coated fertilizer compositions may include one or more polyurethane layers having interspersed layers of wax that enable staged and consistent fertilizer release. Coated fertilizer compositions may include a polyurethane (PU) layer as the most internal layer contacting the granule and a PU layer as the most external layer, with alternating wax layers between each PU layer. For example, if the number of PU layers = x, then number of wax layers = (x-1). Coated fertilizer compositions may have total number of layers ranging from 3 to 9. The sequence of layers in a coated fertilizer composition may include: a first PU layer, a first wax layer, a second PU layer, a second wax layer, a third PU layer, and the like. Successive layers may coat the underlying fertilizer granule or sublayers, where coating is regarding as covering from 90% to 100% of the surface area of the underlying surface.

The coated fertilizer compositions disclosed herein include one or more fertilizers provided in granular form. Suitable fertilizers include urea, nitrogen, phosphorus, or potassium sources such as ammonium nitrate, ammonium sulfate, ammonium sulfate nitrate, calcium nitrate, calcium ammonium nitrate, urea-formaldehyde, monoammonium phosphate, diammonium phosphate, polyphosphate compounds, phosphate rock, single superphosphate, triple super phosphate, potassium nitrate, potassium chloride, potassium sulfate, or combinations thereof, for instance. In some embodiments, the fertilizer can be granular urea. For instance, the fertilizer granules can have a nitrogen-phosphorus-potassium ratio of 46-0-0. The amounts of nitrogen, phosphorus, or potassium sources included in the fertilizer granules can be varied based on the intended end use and can be 0 to 60 wt% for each component, based on the total weight of the fertilizer granule.

Fertilizer granules can have any shape or size desired for their intended use. In some embodiments the fertilizer granules are substantially spherical. The fertilizer granules can have an average particle diameter of 0.5 mm to 6.0 mm, 1.0 mm to 5.5 mm, or 1.5 mm to 5.0 mm. In some embodiments at least 90% by weight of the fertilizer granules have a particle diameter of 2.0 mm to 4.0 mm. Particle diameter can be determined according to "Size Analysis - Sieve Method" IFDC S-107 issued by International Fertilizer Development Center (IFDC) which is a common and internationally approved method used to determine fertilizer particle size.

Coated fertilizer composition may include one or more polyurethane layers generated by reacting the isocyanate component with an isocyanate-reactive component containing a mixture of hydrophilic polyether polyol and a low EW polyol. Isocyanate components can include at least one compound having an isocyanate group. Isocyanate components may be the same or different in coated fertilizer compositions incorporating multiple PU layers.

The isocyanate component may include one or more isocyanates and polyisocyanates having an average of greater than 1.0 isocyanate groups per molecule. The isocyanate components may contain moieties that are aliphatic, cycloaliphatic, alicyclic, arylaliphatic, aromatic, and/or derivatives thereof. Examples of compounds suitable for use in isocyanate components include polymethylene polyphenylisocyanate, toluene 2,4-/2,6-diisocyanate (TDI), methylenediphenyl diisocyanate (MDI), polymeric MDI, and the like.

Isocyanates may have an average isocyanate functionality from 1 to 5, 1.5 to 5, 2 to 5, or 3 to 5. The isocyanate can have an isocyanate equivalent weight (EW) in a range of 80 g/eq to 200 g/eq, 90 g/eq to 175 g/eq, or 100 to 175 g/eq. The isocyanate can have an isocyanate content based on a total weight of the isocyanate in a range of 20 wt% to 45 wt%, 25 wt% to 45 wt%, or 25 wt% to 40 wt%.

Polyurethane layers may have an isocyanate index defined as the molar stoichiometric excess of isocyanate moieties in a reaction mixture with respect to the number of moles of isocyanate-reactive units (active hydrogens available for reaction with the isocyanate moiety), multiplied by 100. An isocyanate index of 100 means that there is no stoichiometric excess, such that there is 1.0 mole of isocyanate groups per 1.0 mole of isocyanate-reactive groups, multiplied by 100. Isocyanate components may have an isocyanate index in a range of from 110 to 170, 120 to 160, or 125 to 155.

Coated fertilizer compositions may include one or more polyurethane layers produced from a reaction of an isocyanate component and an isocyanate-reactive component containing a polyol component containing a mixture of one or more hydrophilic polyether polyols and one or more low EW polyols having, respectively, at least one isocyanate-reactive hydrogen atom group, such as a hydroxyl group and/or an amine group. The polyol component may consist essentially of one or more hydrophilic polyether polyols and one or more low EW polyols, where "consist essentially" or "consisting essentially" means that all polyol species within the isocyanate-reactive component are limited to only those polyols and amounts described, but that other components that do not materially affect the overall isocyanate index and/or average OH number.

Hydrophilic polyether polyols disclosed herein are produced by polymerization of ethylene oxide with an initiator, and optionally another alkylene oxide, where ethylene oxide is 90 wt% or more of the total alkylene oxide. In some cases, ethylene oxide may be a percent by weight of the hydrophilic polyether polyol (wt%) in a range from 90 wt% to 100 wt%, or 95 wt% to 100 wt%. Initiators include molecules having a hydroxyl functionality in a range of 2 to 8, such as between 2 and 4. Suitable initiators include water, glycerol, ethylene glycol, propylene glycol, trimethylolpropane, pentaerythritol, and combinations thereof. Examples of other alkylene oxides that may be utilized to prepare hydrophilic polyether polyols include propylene oxide, butylene oxide, and combinations thereof. Hydrophilic polyether polyols can be prepared according to known method and may include commercial examples sold under the trade names VORANOL™ and CARBOWAX™, available from The Dow Chemical Company.

Isocyanate-reactive components may include a polyol component containing a mixture of hydrophilic polyether polyols. The hydrophilic polyether polyols disclosed herein may have a hydroxyl functionality of 2 to 4, or 2 to 3. Hydrophilic polyether polyols may have an average hydroxyl number (OH number) as determined according to ASTM D4274-21 from 220 mg KOH/g to 400 mg KOH/g, 220 mg KOH/g to 350 mg KOH/g, or 240 mg KOH/g to 350 mg KOH/g. Hydrophilic polyether polyols may have a weight average molecular weight in the range of 200 Da to 1000 Da, 300 Da to 1000 Da, 300 Da to 800 Da, or 220 Da to 760 Da.

Isocyanate-reactive components may include a polyol component containing a mixture of low EW polyols. Low EW polyols may have a formula of $CH_2OHC(R^1)(R^2)CH_2OH$, wherein $R^1$ is $CH_2OH$ or OH, and $R^2$ is H or a C1 to C3 alkyl group. Suitable low EW polyols include C3 to C6 polyols having 2 to 3 hydroxyl functionalities such as glycerol and trimethoylpropane.

Low EW polyols may have an equivalent weight of 110 or less, 100 or less, or 60 or less. Low EW polyols may have an average hydroxyl number as determined according to ASTM D4274-21 of 500 mg KOH/g or more, 750 mg KOH/g or more, or 900 mg KOH/g or more.

Isocyanate-reactive components may include one or more hydrophilic polyether polyols at a percent by weight of the isocyanate-reactive component at 65 wt% to 85 wt%, 65 wt% to 80 wt%, 67 wt% to 80 wt%, 65 wt% to 75 wt%, or 67 wt% to 75 wt%. Isocyanate-reactive components may include one or more low EW polyols at a percent by weight of the isocyanate-reactive component ranging from 15 wt% to 35 wt%, 20 wt% to 35 wt%, 20 wt% to 33 wt%, 15 wt% to 25 wt%, or 15 wt% to 33 wt%. In some embodiments, the isocyanate-reactive component may include a mass ratio of hydrophilic polyether polyols to low EW polyols in a range of 65:35 to 85:15, 67:33 to 85:15, 67:33 to 80:20, or 75:25 to 80:20.

Isocyanate-reactive components disclosed herein may include one or more tertiary amines. Suitable tertiary amines include triethanolamine, triisopropanolamine, N-methyl-diethanolamine, N-ethyl-diethanolamine, and N,N-dimethyl-ethanolamine. The isocyanate-reactive component may further include a tertiary amine at a percent by weight (wt%) of 15 wt% or less, 10 wt% or less, or 8 wt% or less. The isocyanate-reactive component may further include a tertiary amine at a percent by weight (wt%) in a range from 1 wt% to 20 wt%, 1 wt% to 15 wt%, or 5 wt% to 15 wt%. In some cases, the isocyanate-reactive component consists essentially of from 5 wt% to 15 wt% tertiary amine, 15 wt% to 35 wt% low EW polyol, and 50 wt% to 80 wt% hydrophilic polyether polyol.

Coated fertilizer compositions may include one or more wax layers prepared from one or more waxes, and the waxes used in each layer may be the same or different. Suitable waxes include polyolefin waxes having carbon numbers ranging from C20 to C35, and can include alpha olefin waxes, natural and synthetic waxes, and the like.

Coated fertilizer compositions may include one or more polyurethane layers in which the polyurethane is included at a percent by weight (wt%) of the coated fertilizer composition in a range from 1.5 wt% to 4 wt%, 2 wt% to 4 wt%, or 2 wt% to 3.5 wt%. Coated fertilizer compositions may include one or more wax layers in which the wax is included at a percent by weight (wt%) of the coated fertilizer composition in a range from 0.2 wt% to 1 wt%, 0.2 wt% to 0.9 wt%, or 0.3 wt% to 0.7 wt%.

Coated fertilizer compositions disclosed herein may release less than 30 %, less than 40%, or less than 45% of the total weight of fertilizer granules after 28 days in contact with water. Coated fertilizer compositions disclosed herein may release less than 10 %, less than 15%, or less than 20% of the total weight of fertilizer granules after 14 days in contact with water.

Coated fertilizer granule compositions can be made utilizing known equipment, conditions, and components, such as a drum coater with the application of heat. Methods of preparing may include providing fertilizer granules to a drum coater, forming a first polyurethane layer on the fertilizer granule; forming a first hydrophobic layer on the first polyurethane layer; and forming the second polyurethane layer on the first hydrophobic layer. The layering steps may be repeated as many times as desired. Formation of one or more of the polyurethane layers may include dividing the isocyanate component and/or isocyanate-reactive component into portions that are added at various stages of the coating process. As an example, a first portion of the isocyanate-reactive component may be added to the drum coater to coat the fertilizer granules, followed by the addition of the isocyanate component, and then the subsequent addition of the second portion of the isocyanate-reactive component to the mixture.

Examples

The following examples are provided to illustrate the embodiments of the invention, but are not intended to limit the scope thereof. Table 1 provides the materials used in the following examples.

| Table 1: Materials used in the examples | |
|---|---|
| Ingredient | Description |
| Polyol 1 | Glycerol-initiated, all-EO 625 Da, hydroxyl functionality of 3 and an average OH number of 270 mg KOH/g. |
| Polyol 2 | Ethylene glycol-initiated, all-EO 400 Da polyether diol, average OH number of 281 KOH/g |
| Comparative Polyol | Glycerol-initiated, all-PO 700 MW polyether triol, average OH number of 238 KOH/g |
| BDO | 1,4-Butanediol, OH number of 1246 mg KOH/g |
| TMP | Trimethylolpropane, OH number of 1255 mg KOH/g |
| Glvcerol | Glycerol, OH number of 1827 mg KOH/g |
| TEA | Triethanolamine, Trifunctional triethoxylated amine OH number of 1121 mg KOH/g |
| Wax | C30+HA, Oligomeric wax primarily C30 chains |
| Isocyanate | Polymeric MDI, EW ~ 134 g/eq, functionality ~2.7 |
| Urea (46-0-0) | 2-4 mm pure, uncoated urea prills |

In the following examples, urea fertilizer granules were coated with 5 alternating PU (0.9 wt% + 0.9 wt% + 0.9 wt% = 2.7 wt% total) and wax layers (0.25 wt% + 0.25 wt% = 0.5 wt% total) using a roller drum coater and a layer-by-layer component coating process as follows. Fertilizer (0.5 kg to 2.0 kg) was first dried in the oven at 80 °C for at least 6 hours as per standard industry practice, before the coating process has been planned to start. Fertilizer was then transferred to a drum coater heated to 80 °C. To produce the coated fertilizer compositions, each coating component was added and allowed to coat the particles for 30 seconds before subsequent component additions. The order of addition was as follows: a first portion (40%) of isocyanate, the isocyanate-reactive components, the remaining 60% of the pre-weighed isocyanate portion is added, and followed by the wax component. The process was repeated to form 5 coating layers: PU-wax-PU-wax-PU. The coated fertilizer compositions were then allowed to cool and aged for a week prior to release testing.

For release tests, 10 grams of each sample were placed into respective containers with 100 mL of deionized water. Then, at 14 days and at 28 days from contact with water, refractive index measurements were taken to determine weight percent of released fertilizer (urea). For determining refractive index, an initial calibration curve was created by measuring the refractive index, using a refractometer, of aqueous, uncoated urea (SUPERU 46-0-0; 2-4 mm uncoated urea prills) solutions with varying concentrations. The equation was solved for the wt% of dissolved urea as follows:

$$X = \frac{Y - 1.333}{0.0013}$$

where X = wt% released urea. The calibration curve, which plotted urea wt% in deionized water vs refractive index, had the curve had a best fit line: y = 0.0013x + 1.333, and $R^2$ = 0.9997.

Formulation details and testing results for comparative examples (CE) and inventive examples (IE) are shown in Tables 2 and 3. The isocyanate-reactive component for IE1 contained 67.5 wt% Polyol 1, 22.5 wt% glycerol, and 10 wt% TEA. The isocyanate-reactive component for IE2 contained 70 wt% Polyol 2, 20 wt% glycerol, and 10 wt% TEA. The isocyanate-reactive component for IE2 contained 67.5 wt% Polyol 1, 22.5 wt% TMP, and 10 wt% TEA.

| Table 2: Laver Formulations for Example 1 | | | | | | | | | | |
|---|---|---|---|---|---|---|---|---|---|---|
| Sample | CE1 | CE2 | CE3 | CE4 | CE5 | CE6 | CE8 | IE1 | IE2 | IE3 |
| Polyurethane lavers | | | | | | | | | | |
| Isocyanate - First Addition (g) | 1.9 | 2.4 | 1.98 | 1.87 | 2.58 | 2.42 | 3.08 | 2.52 | 2.48 | 2.38 |
| Polyol 1 (g) | 4.1 | - | - | - | - | - | - | - | - | - |
| Polyol 1 + BDO (75/25) (g) | - | 3.1 | - | - | - | - | - | - | - | - |
| Polyol 2 (g) | - | - | 4.05 | - | - | - | - | - | - | - |
| Comparative Polyol (g) | - | - | - | 4.32 | - | - | - | - | - | - |
| Comparative Polyol + glycerol (70/30) (g) | - | - | - | - | 2.55 | - | - | - | - | - |
| Comparative Polyol + glycerol (80/20) (g) | - | - | - | - | - | 2.95 | - | - | - | - |
| Glvcerol (g) | - | - | - | - | - | - | 1.31 | - | - | - |
| Polyol 1 + glycerol (75/25) (g) | - | - | - | - | - | - | - | 2.70 | - | - |
| Polyol 2 + glycerol (78/22) (g) | - | - | - | - | - | - | - | - | 2.79 | - |
| Polyol 1 + TMP (75/25) (g) | - | - | - | - | - | - | - | - | - | 3.06 |
| TEA | 10.0 | 10.0 | 10.0 | 10.0 | 10.0 | 10.0 | 10.0 | 10.0 | 10.0 | 10.0 |
| Isocyanate - second addition (g) | 3.0 | 4.5 | 2.97 | 2.81 | 3.87 | 3.63 | 4.61 | 3.78 | 3.73 | 3.55 |
| Wax layers | | | | | | | | | | |
| Wax (g) | 2.5 | 2.5 | 2.5 | 2.5 | 2.5 | 2.5 | 2.5 | 2.5 | 2.5 | 2.5 |
| Overall percentage by weight | | | | | | | | | | |
| PU (wt%) | 2.7 | 2.7 | 2.7 | 2.7 | 2.7 | 2.7 | 2.7 | 2.7 | 2.7 | 2.7% |
| Wax (wt%) | 0.5 | 0.5 | 0.5 | 0.5 | 0.5 | 0.5 | 0.5 | 0.5 | 0.5 | 0.5% |
| Total PU + wax (wt%) | 3.2 | 3.2 | 3.2 | 3.2 | 3.2 | 3.2 | 3.2 | 3.2 | 3.2 | 3.2% |
| NCO Index | 140 | 140 | 140 | 140 | 140 | 140 | 140 | 140 | 140 | 140 |

(continued)

| Fertilizer Release Testing | | | | | | | | | | |
|---|---|---|---|---|---|---|---|---|---|---|
| Release @ 14 days (%) | 30 | 57 | 70 | 24 | >95 | 30 | >95 | 10 | 15 | 6 |
| Release @ 28 days (%) | 64 | 75 | >95 | 49 | - | 54 | - | 34 | 31 | 17 |

| Table 3: Cumulative Coating Formulations | | | | | | | | | | |
|---|---|---|---|---|---|---|---|---|---|---|
| | CE1 | CE2 | CE3 | CE4 | CE5 | CE6 | CE8 | IE1 | IE2 | IE3 |
| Isocyanate (%) | 54.4 | 66.0 | 55.0 | 52.0 | 71.7 | 67.2 | 85.4 | 70.0 | 69.0 | 66.0 |
| Polyol 1 (%) | 41.0 | 23.0 | - | - | - | - | - | 20.2 | | 22.9 |
| Polyol 2 (%) | - | - | 40.5 | - | - | - | - | - | 21.7 | - |
| Comparative Polyol (%) | - | - | - | 43.2 | 17.8 | 23.6 | - | - | - | - |
| Glycerol (%) | - | - | - | - | 7.7 | 5.9 | 13.1 | 6.8 | 6.2 | - |
| BDO (%) | - | 7.6 | - | - | - | - | - | - | - | - |
| TMP (%) | - | - | - | - | - | - | - | - | - | 7.7 |
| TEA (%) | 4.6 | 3.4 | 4.5 | 4.8 | 2.8 | 3.3 | 1.4 | 3.0 | 3.1 | 3.4 |

The comparative examples CE1-8 show poor release performance of urea fertilizer relative to the extended release times of the examples IE1-IE3. Surprisingly, the hydrophilic blends used to form the polyurethane layers of the coated fertilizers provides enhanced control over fertilizer release time, as compared to hydrophobic polyurethane coatings, such as the propylene oxide based formulation used in CE4.

## Claims

1. A coated fertilizer, comprising:

    a fertilizer granule;
    two or more polyurethane layers on the fertilizer granule, wherein the polyurethane layer is reaction product of:

    (i) an isocyanate component including one or more isocyanate compound, and
    (ii) an isocyanate-reactive component including a polyol component consisting of: (a) from 65 wt% to 80 wt% of a hydrophilic polyether polyol having an OH number in a range of 220 mg KOH/g to 400 mg KOH/g, wherein ethylene oxide is from 90 wt% to 100 wt% of a total alkylene oxide content of the hydrophilic polyether polyol, hydroxyl functionality from 2 to 3, and (b) from 20 wt% to 35 wt% of a low EW polyol having a formula of $CH_2OHC(R^1)(R^2)CH_2OH$, wherein $R^1$ is $CH_2OH$ or OH, and $R^2$ is H or a C1 to C3 alkyl group; the isocyanate index being from 120 to 160; and

    one or more wax layers on the fertilizer granule including a polyolefin wax.

2. The coated fertilizer composition of claim 1, wherein the hydrophilic polyether polyol has a weight average molecular weight in a range of 300 Da to 800 Da.

3. The coated fertilizer composition of claim 1, wherein the isocyanate-reactive component comprises a tertiary amine added to the isocyanate-reactive component at a percent by weight in a range of 5 wt% to 15 wt%.

4. The coated fertilizer composition of claim 1, wherein the coated fertilizer composition releases less than 40% of the total weight of fertilizer granules after 28 days in contact with water.

5. The coated fertilizer composition of claim 1, wherein isocyanate-reactive component comprises a ratio of hydrophilic polyether polyol and the one or more low EW polyols in the in a ratio of 75:25 to 80:20.

6. The coated fertilizer composition of claim 1, wherein the isocyanate-reactive component consists essentially of from 5 wt% to 15 wt% tertiary amine, 15 wt% to 35 wt% low EW polyol, and 50 wt% to 70 wt% hydrophilic polyether polyol.

7. A method of making the coated fertilizer composition of claim 1, the method comprising:

forming a first polyurethane layer of the two or more polyurethane layers on the fertilizer granule;
forming a first wax layer of the one or more wax layers on the first polyurethane layer; and
forming a second polyurethane layer of the two or more polyurethane layers on the first wax layer.

**Patentansprüche**

1. Überzogenes Düngemittel, umfassend:

ein Düngemittelgranulat;
zwei oder mehrere Polyurethanschichten auf dem Düngemittelgranulat, wobei die Polyurethanschicht ein Reaktionsprodukt ist von:

(i) einer Isocyanatkomponente, die eine oder mehrere Isocyanatverbindungen einschließt, und
(ii) einer Isocyanat-reaktiven Komponente, die eine Polyolkomponente einschließt, bestehend aus: (a) zu 65 Gew.-% bis 80 Gew.-% einem hydrophilen Polyetherpolyol, das eine OH-Zahl in einem Bereich von 220 mg KOH/g bis 400 mg KOH/g aufweist, wobei Ethylenoxid zu 90 Gew.-% bis 100 Gew.-% eines gesamten Alkylenoxidgehalts des hydrophilen Polyetherpolyols, eine Hydroxylfunktionalität von 2 bis 3 ist, und (b) zu 20 Gew.-% bis 35 Gew.-% einem niedrigen EW-Polyol, das eine Formel von $CH_2OHC(R^1)(R^2)CH_2OH$ aufweist, wobei $R^1$ $CH_2OH$ oder OH ist und $R^2$ H oder eine C1 bis C3-Alkylgruppe ist; wobei der Isocyanatindex von 120 bis 160 ist; und

eine oder mehrere Wachsschichten auf dem Düngemittelgranulat, die ein Polyolefinwachs einschließen.

2. Überzogene Düngemittelzusammensetzung nach Anspruch 1, wobei das hydrophile Polyetherpolyol ein Gewichtsmittel des Molekulargewichts in einem Bereich von 300 Da bis 800 Da aufweist.

3. Überzogene Düngemittelzusammensetzung nach Anspruch 1, wobei die Isocyanat-reaktive Komponente ein tertiäres Amin umfasst, das der Isocyanat-reaktiven Komponente in einem Gewichtsprozent in einem Bereich von 5 Gew.-% bis 15 Gew.-% zugesetzt wird.

4. Überzogene Düngemittelzusammensetzung nach Anspruch 1, wobei die überzogene Düngemittelzusammensetzung weniger als 40 % des Gesamtgewichts der Düngemittelgranulate nach 28 Tagen in Berührung mit Wasser freisetzt.

5. Überzogene Düngemittelzusammensetzung nach Anspruch 1, wobei die Isocyanat-reaktive Komponente ein Verhältnis von hydrophilem Polyetherpolyol und dem einen oder den mehreren niedrigen EW-Polyolen in dem in einem Verhältnis von 75 : 25 bis 80 : 20 umfasst.

6. Überzogene Düngemittelzusammensetzung nach Anspruch 1, wobei die Isocyanat-reaktive Komponente im Wesentlichen aus zu 5 Gew.-% bis 15 Gew.-% tertiärem Amin, zu 15 Gew.-% bis 35 Gew.-% niedrigem EW-Polyol und zu 50 Gew.-% bis 70 Gew.-% hydrophilem Polyetherpolyol besteht.

7. Verfahren zum Herstellen der überzogenen Düngemittelzusammensetzung nach Anspruch 1, das Verfahren umfassend:

Ausbilden einer ersten Polyurethanschicht der zwei oder der mehreren Polyurethanschichten auf dem Düngemittelgranulat;
Ausbilden einer ersten Wachsschicht der einen oder der mehreren Wachsschichten auf der ersten Polyurethanschicht; und
Ausbilden einer zweiten Polyurethanschicht der zwei oder der mehreren Polyurethanschichten auf der ersten Wachsschicht.

**Revendications**

1. Engrais enrobé, comprenant :

   un granulé d'engrais ;
   deux couches de polyuréthane ou plus sur le granulé d'engrais, dans lequel la couche de polyuréthane est un produit de réaction de :

   (i) un composant isocyanate comportant un ou plusieurs composés isocyanates, et
   (ii) un composant réactif aux isocyanates comportant un composant polyol constitué de : (a) de 65 % en poids à 80 % en poids d'un polyol de polyéther hydrophile ayant un indice OH compris dans une plage de 220 mg KOH/g à 400 mg KOH/g, dans lequel l'oxyde d'éthylène représente de 90 % en poids à 100 % en poids d'une teneur totale en oxyde d'alkylène du polyol de polyéther hydrophile, une fonctionnalité hydroxyle allant de 2 à 3, et (b) de 20 % en poids à 35 % en poids d'un polyol à faible EW ayant une formule $CH_2OHC(R^1)(R^2)$ $CH_2OH$, dans laquelle $R^1$ est $CH_2OH$ ou OH, et $R^2$ est H ou un groupe alkyle en C1 à C3 ; l'indice d'isocyanate allant de 120 à 160 ; et

   une ou plusieurs couches de cire sur le granulé d'engrais comportant une cire de polyoléfine.

2. Composition d'engrais enrobé selon la revendication 1, dans laquelle le polyol de polyéther hydrophile a une masse moléculaire moyenne en poids comprise dans une plage de 300 Da à 800 Da.

3. Composition d'engrais enrobé selon la revendication 1, dans laquelle le composant réactif aux isocyanates comprend une amine tertiaire ajoutée au composant réactif aux isocyanates à un pour cent en poids dans une plage de 5 % en poids à 15 % en poids.

4. Composition d'engrais enrobé selon la revendication 1, dans laquelle la composition d'engrais enrobé libère moins de 40 % du poids total de granulés d'engrais après 28 jours en contact avec de l'eau.

5. Composition d'engrais enrobé selon la revendication 1, dans laquelle le composant réactif aux isocyanates comprend un rapport de polyol de polyéther hydrophile et du ou des polyols à faible EW dans le dans un rapport de 75:25 à 80:20.

6. Composition d'engrais enrobé selon la revendication 1, dans laquelle le composant réactif aux isocyanates est essentiellement constitué de 5 % en poids à 15 % en poids d'amine tertiaire, de 15 % en poids à 35 % en poids de polyol à faible EW, et de 50 % en poids à 70 % en poids de polyol de polyéther hydrophile.

7. Procédé de préparation de la composition d'engrais enrobé selon la revendication 1, le procédé comprenant :

   la formation d'une première couche de polyuréthane des deux couches de polyuréthane ou plus sur le granulé d'engrais ;
   la formation d'une première couche de cire de la ou des couches de cire sur la première couche de polyuréthane ; et
   la formation d'une seconde couche de polyuréthane des deux couches de polyuréthane ou plus sur la première couche de cire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013173739 A